# EUROPEAN PATENT APPLICATION

(11) **EP 4 697 470 A1**
(43) Date of publication of application: **18.02.2026**
(21) Application number: 24825674.5
(22) Date of filing: 29.05.2024
(51) Int. Cl.: H01M 50/227, B60K 1/04, H01M 50/209, H01M 50/224, H01M 50/242, H01M 50/244, H01M 50/249

(54) **VEHICULAR BATTERY CASE**

(30) Priority: 19.06.2023 JP 2023100058
(71) Applicant: KABUSHIKI KAISHA KOBE SEIKO SHO (KOBE STEEL, LTD.), Hyogo 651-8585 (JP)
(72) Inventor: SEKIGUCHI, Shu, Nishi-ku, Kobe-shi, Hyogo 651-2271 (JP); WATANABE, Kenichi, Nishi-ku, Kobe-shi, Hyogo 651-2271 (JP); KASHIMA, Hiroko, Nishi-ku, Kobe-shi, Hyogo 651-2271 (JP)
(74) Representative: TBK
(86) International application number: PCT/JP2024/019704
(87) International publication number: WO 2024/262267

(57) **Abstract**

The vehicular battery case 10 includes a frame 100 in which a plurality of extrusion materials 110, 120, 130, and 140 are arranged in a frame shape, and a resin material 200 integrally molded with the frame 100. The resin material 200 includes a bottom wall 210 arranged on a lower side of the frame 100 and having bottom surfaces 112, 122, and 132 of the frame 100 embedded therein, and a peripheral wall 220 arranged circumferentially on an outer side in a horizontal direction of the frame 100 and having a side surface on the outer side in the horizontal direction of the frame 100 embedded therein.

## Description

### TECHNICAL FIELD

The present disclosure relates to a vehicular battery case.

### BACKGROUND ART

While an electric vehicle such as an electric car needs to be equipped with a large capacity battery in order to secure a sufficient cruising distance, a wide cabin is required. In order to satisfy these requirements, in many electric vehicles, a large capacity battery is stored in a battery case and mounted on the entire underfloor surface of the car. Therefore, the battery case for an electric car is required to have high sealability for preventing water from entering from a road surface or the like to prevent malfunction of an electronic component, and is also required to have high collision strength for protecting an internal battery.

For example, Patent Document 1 discloses a battery case for an electric car including a tray in which a metal plate is formed into a bathtub shape by press molding, and a frame made of an aluminum alloy extrusion material arranged around the tray. High sealability by the tray and high collision strength by the frame are both achieved.

### PRIOR ART DOCUMENT

### PATENT DOCUMENT

Patent Document 1: JP 2021-41783 A

### SUMMARY OF THE INVENTION

### PROBLEMS TO BE SOLVED BY THE INVENTION

In Patent Document 1, since the tray is formed by press molding, it is not possible to completely eliminate the roundness of the inner surface of the tray in consideration of moldability. Therefore, when the battery is accommodated in the tray, a gap due to the roundness is generated between the tray and the battery. That is, there is room for improvement in battery mounting efficiency. In addition, since it is necessary to join the frame and the tray, many assembling steps are required.

An object of the present disclosure is to improve battery mounting efficiency and reduce the number of assembling steps in a vehicular battery case.

### SOLUTIONS TO THE PROBLEM

The present disclosure provides a vehicular battery case, including:
a frame in which a plurality of extrusion materials are arranged in a frame shape; and
a resin material integrally molded with the frame,
in which the resin material includes
a bottom wall arranged on a lower side of the frame and having a bottom surface of the frame embedded therein, and
a peripheral wall arranged circumferentially on an outer side in a horizontal direction of the frame and having a side surface on the outer side in the horizontal direction of the frame embedded therein.

According to this configuration, since the frame can be formed by integrally molding the resin material and the frame to form the bottom wall and the peripheral wall and fixing the plurality of extrusion materials in a frame shape at the same time, the number of assembling steps can be reduced. Specifically, the step of joining a plurality of extrusion materials in a frame shape to form the frame and the step of joining another member such as a bottom plate to the frame can be omitted or simplified. In addition, a battery accommodating space without roundness can be configured by the flexible moldability of the resin material, and the mounting efficiency of the battery can be improved. In addition, since the bottom wall and the peripheral wall constituting the outer surface are integrally formed seamlessly by the resin material, it is possible to secure high sealability for preventing water from entering from the outside. Here, embedding includes not only a case where the entirety is completely embedded but also a case where a part is embedded (that is, a part is exposed).

The plurality of extrusion materials may include:
a pair of side members extending in a vehicle body front-rear direction; and
a cross member extending in a vehicle body width direction and connecting the pair of side members.

According to this configuration, a load in the vehicle body front-rear direction can be received by the pair of side members, and a load in the vehicle body width direction can be received by the cross member, so that high strength can be secured.

At least one set of the plurality of extrusion materials may be welded to each other. At least one set of the plurality of extrusion materials may be fastened to each other by a bracket.

According to these configurations, at least one set of the plurality of extrusion materials is not only fixed with the resin material but also separately bonded to each other, so that the frame can be firmly fixed as compared with a case where the frame is simply fixed with the resin material. In addition, since the shape of the frame can be fixed to some extent before integral molding with the resin material, handling of the frame at the time of integral molding can be facilitated.

The resin material may have a flange wall extending horizontally outward from the peripheral wall, and
a vehicle body joining member which is made of metal and enables joining with a vehicle body may be embedded in the flange wall.

According to this configuration, the battery case and the vehicle body can be firmly fixed via the vehicle body joining member.

A battery joining member which is made of metal and enables joining with a battery may be embedded in the bottom wall.

According to this configuration, the battery case and the battery can be firmly fixed via the battery joining member.

A bottom plate made of metal may be embedded in the bottom wall.

According to this configuration, the bottom plate can protect the battery against impact from the road surface, and high battery protection performance can be secured.

### EFFECTS OF THE INVENTION

According to the present disclosure, in the vehicular battery case, mounting efficiency of the battery can be improved, and the number of assembling steps can be reduced.

### BRIEF DESCRIPTION OF THE DRAWINGS

[Fig. 1] Fig. 1 is a side view of an electric vehicle.
[Fig. 2] Fig. 2 is a perspective view of a vehicular battery case according to the first embodiment.
[Fig. 3] Fig. 3 is a perspective view of a vehicular battery case taken along line III-III of Fig. 2.
[Fig. 4] Fig. 4 is a cross-sectional view of the vehicular battery case as viewed from a direction of an arrow IV in Fig. 3.
[Fig. 5] Fig. 5 is a cross-sectional view of the vehicular battery case as viewed from a direction of an arrow V in Fig. 3.
[Fig. 6] Fig. 6 is a perspective view of a vehicular battery case according to a modification of Fig. 3.
[Fig. 7] Fig. 7 is a perspective view of a vehicular battery case according to a second embodiment.
[Fig. 8] Fig. 8 is a perspective view of the vehicular battery case taken along line VIII-VIII in Fig. 7.
[Fig. 9] Fig. 9 is a cross-sectional view of the vehicular battery case as viewed from a direction of arrow IX in Fig. 8.
[Fig. 10] Fig. 10 is a cross-sectional view of the vehicular battery case as viewed from a direction of an arrow X in Fig. 8.

### DETAILED DESCRIPTION

Hereinafter, embodiments of the present invention will be described with reference to the accompanying drawings.

### (First embodiment)

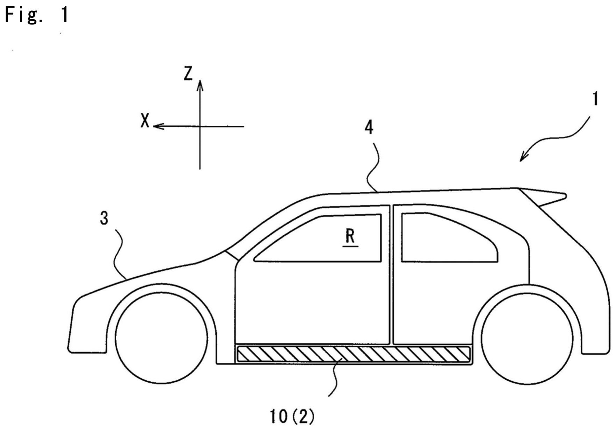

Referring to Fig. 1, a vehicle 1 is an electric car that travels by driving a motor with electric power supplied from a battery 2. The vehicle 1 is a car that travels by electric power, and may be, for example, an electric vehicle or a plug-in hybrid vehicle. The type of the car is not particularly limited, and may be a passenger car, a truck, a work vehicle, other mobility, or the like. Hereinafter, a case where the vehicle 1 is a passenger car type electric vehicle will be described as an example.

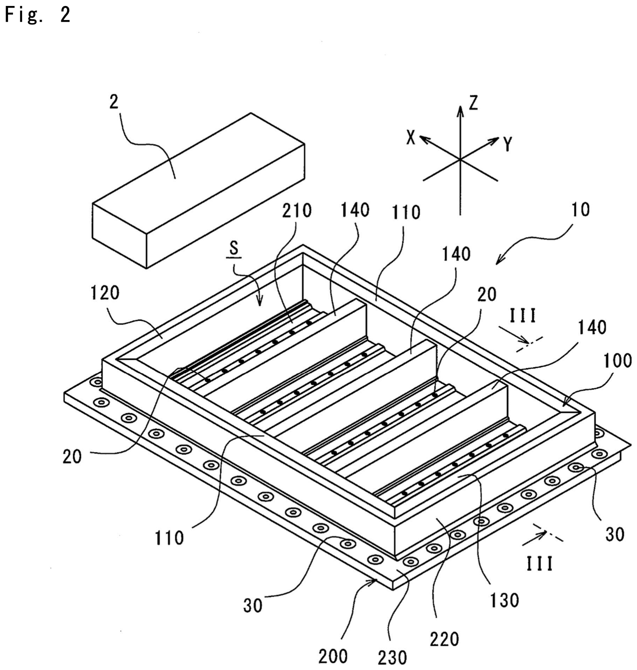

In the vehicle 1, a driving motor, a high-voltage device, and the like are mounted on a vehicle body front portion 3. In addition, the vehicle 1 is mounted with a vehicular battery case 10 (hereinafter, also simply referred to as a battery case 10) in which the battery 2 is stored substantially entirely under the floor of a cabin R of a vehicle body center portion 4. In Fig. 1, the front-rear direction (vehicle body front-rear direction) of the vehicle 1 is indicated by the X direction, and the up-down direction (vehicle body up-down direction) is indicated by the Z direction. The same notation is used in the following drawings, and the width direction (vehicle body width direction) of the vehicle 1 is indicated by the Y direction in Fig. 2 and subsequent drawings.

Referring to Fig. 2, the battery case 10 includes a frame 100 in which a plurality of extrusion materials 110, 120, 130, and 140 are arranged in a frame shape, and a resin material 200 integrally molded with the frame 100. The plurality of extrusion materials 110, 120, 130, and 140 are made of metal, for example, aluminum alloy. The plurality of extrusion materials 110, 120, 130, and 140 are obtained by heating and compressing a billet-shaped metal material in a main body of an extruder and extruding the billet-shaped metal material from a die attached to the main body. After extrusion from the die, required processing such as cooling, take-up, and cutting is executed. The resin material 200 is made of, for example, a fiber reinforced plastic (FRP) in which a matrix resin impregnates fibers.

Fig. 2 illustrates a state in which one battery 2 is taken out from the battery case 10 as a schematic rectangular parallelepiped. However, actually, a plurality of batteries 2 having the same shape are stored in the battery case 10. Note that Fig. 2 illustrates a state in which the lid body of the battery case 10 is removed so that the inside of the battery case 10 can be seen.

The frame 100 constitutes a skeleton of the battery case 10. The frame 100 has a rectangular outer shape in plan view (Z direction view). However, the outer shape of the frame 100 is not limited to a rectangle, and may be any polygon. The frame 100 serves to protect the battery 2 arranged inside.

In the present embodiment, the plurality of extrusion materials 110, 120, 130, and 140 of the frame 100 includes a pair of side members 110, a front member 120, a rear member 130, and a cross member 140. In the present embodiment, the pair of side members 110, the front member 120, the rear member 130, and the cross member 140 are not welded to each other.

The pair of side members 110 is arranged apart from each other in the vehicle body width direction and extends in the vehicle body front-rear direction. The front member 120 extends in the vehicle body width direction and connects the front ends of the pair of side members 110. The rear member 130 extends in the vehicle body width direction and connects the rear ends of the pair of side members 110. The cross member 140 extends in the vehicle body width direction and connects center portions of the pair of side members 110 in the vehicle body front-rear direction.

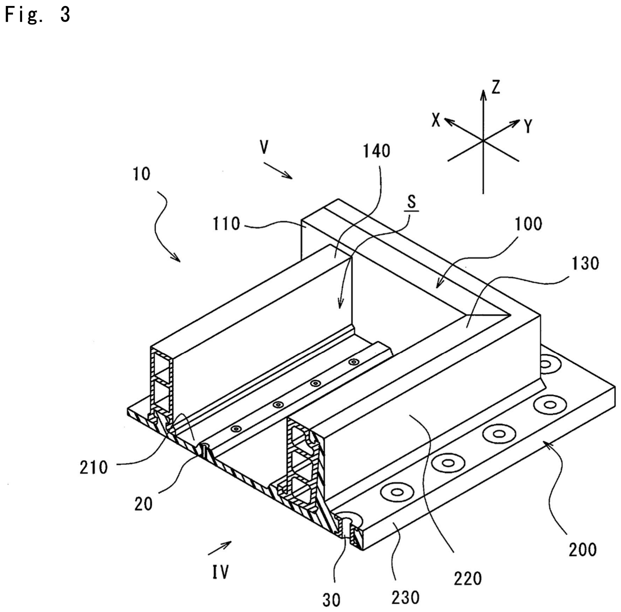

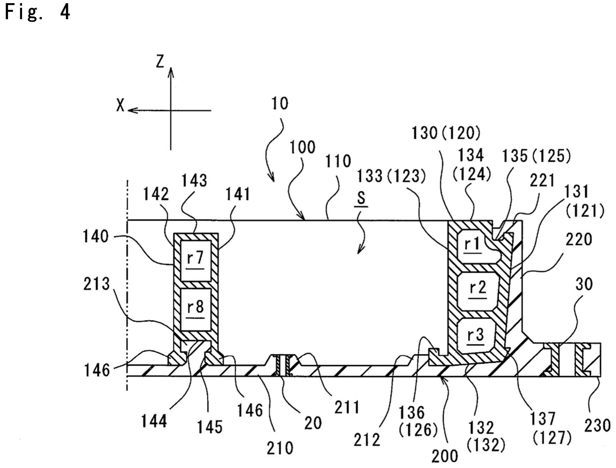

Referring to Figs. 3 and 4, the rear member 130 has a substantially J-shape in a cross section perpendicular to the vehicle body width direction. The rear member 130 has a closed cross-sectional shape defining a plurality of rooms r1 to r3. In the illustrated example, the plurality of rooms r1 to r3 are arranged side by side in the vehicle body up-down direction.

A side surface 131 on the outer side in the horizontal direction of the rear member 130 is inclined inward and downward in the horizontal direction with respect to the vertical direction. Here, the inner side in the horizontal direction refers to the center side of the frame 100 in plan view, and the outer side in the horizontal direction refers to the opposite side. A bottom surface 132 of the rear member 130 is inclined inward and downward in the horizontal direction with respect to the horizontal direction. A side surface 133 on the inner side in the horizontal direction of the rear member 130 extends along the vertical direction, and the top surface 134 extends along the horizontal direction.

The rear member 130 has a groove-shaped rear engagement portion 135 at an upper corner portion on the outer side in the horizontal direction. The rear engagement portion 135 is engaged with the resin material 200. In addition, the rear member 130 has a hook-shaped rear hook portion 136 protruding inward in the horizontal direction at a lower corner on the inner side in the horizontal direction. The rear hook portion 136 is not engaged with the resin material 200, and is hooked to the mold in the manufacturing process to serve to fix the position of the rear member 130 with respect to the mold. In addition, the rear member 130 has a rear projection 137 protruding outward in the horizontal direction at a lower corner on the outer side in the horizontal direction. The rear projection 137 is embedded in the resin material 200 and serves to fix the position of the rear member 130. Note that the rear engagement portion 135, the rear hook portion 136, and the rear projection 137 can be omitted as necessary.

The front member 120 has the same shape as the rear member 130. That is, the front member 120 has a side surface 121, a bottom surface 122, a side surface 123, and a top surface 124 (see parentheses in Fig. 4). Similarly, the front member 120 includes a front engagement portion 125, a front hook portion 126, and a front projection 127 (see parentheses in Fig. 4). The front engagement portion 125, the front hook portion 126, and the front projection 127 can be omitted as necessary.

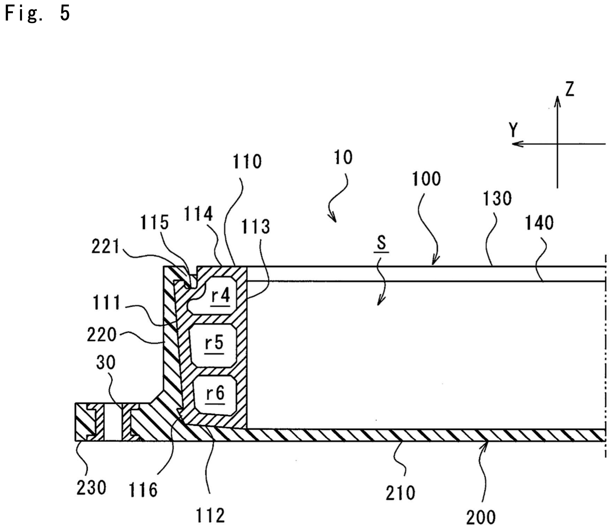

Referring to Figs. 3 and 5, each of the pair of side members 110 has a schematic I-shape in a cross section perpendicular to the vehicle body front-rear direction. Each of the pair of side members 110 has a closed cross-sectional shape having a plurality of rooms r4 to r6 in a cross section perpendicular to the vehicle body front-rear direction. In the illustrated example, the plurality of rooms r4 to r6 are arranged side by side in the vehicle body up-down direction.

The side surfaces 111 on the outer side in the horizontal direction of each of the pair of side members 110 are inclined downward toward the inner side in the horizontal direction with respect to the vertical direction. The bottom surface 112 of each of the pair of side members 110 is inclined inward and downward in the horizontal direction with respect to the horizontal direction. Note that the side surface 113 on the inner side in the horizontal direction of each of the pair of side members 110 extends along the vertical direction, and the top surface 114 extends along the horizontal direction.

Each of the pair of side members 110 has a groove-shaped side engagement portion 115 at an upper corner portion on the outer side in the horizontal direction. Each of the pair of side members 110 has a side projection 116 protruding outward in the horizontal direction at a lower corner on the outer side in the horizontal direction. The side projections 116 are embedded in the resin material 200, and serve to fix the positions of the pair of side members 110. Each of the pair of side members 110 does not have a portion protruding inward in the horizontal direction like the rear hook portion 136 (see Fig. 4). The side engagement portion 115 and the side projection 116 can be omitted as necessary.

Referring to Figs. 3 and 4, the cross member 140 has a schematic I-shape in a cross section perpendicular to the vehicle body width direction. The cross member 140 has a closed cross-sectional shape having a plurality of rooms r7 to r8 in a cross section perpendicular to the vehicle body width direction. In the illustrated example, the plurality of rooms r7 to r8 are arranged side by side in the vehicle body up-down direction.

The side surfaces 141 and 142 of the cross member 140 extend along the vertical direction, and the top surface 143 and the bottom surface 144 extend along the horizontal direction. The bottom surface 144 is provided at a position slightly higher than the lower ends of the side surfaces 141 and 142. That is, the side surfaces 141 and 142 of the cross member 140 extend downward beyond the bottom surface 144, and an opening 145 opened downward is formed. A cross projection 146 protruding toward the front side and the rear side in the vehicle body front-rear direction is provided on the tip of the opening 145. The resin material 200 enters the opening 145 to fix the cross member 140. The cross projection 146 may be omitted as necessary.

Referring to Figs. 2 to 5, the resin material 200 has a container shape arranged so as to wrap the frame 100 from the lower side and the outer side in the horizontal direction. Specifically, the resin material 200 includes a bottom wall 210 arranged on the lower side of the frame 100 and having the bottom surfaces 112, 122, and 132 of the frame 100 embedded therein, and a peripheral wall 220 circumferentially arranged on the outer side in the horizontal direction of the frame 100 and having the side surfaces 111, 121, and 131 on the outer side in the horizontal direction of the frame 100 embedded therein.

The bottom wall 210 constitutes a lower surface of a battery accommodating space S in which the battery 2 is accommodated. The side surface of the battery accommodating space S is configured by the side surfaces 113 of the pair of side members 110, the side surface 123 of the front member 120, and the side surface 133 of the rear member 130. The upper surface of the battery accommodating space S is configured by the lower surface of the lid body of the battery case 10.

The bottom wall 210 is provided with a first elongated protrusion 211 that protrudes and extends in the vehicle body width direction. The first elongated protrusion 211 is arranged between the cross members 140 adjacent to each other in the vehicle body front-rear direction, between the cross member 140 and the rear member, and between the cross member 140 and the front member 120. In the illustrated example, the first elongated protrusion 211 is not in contact with any of the cross member 140, the front member 120, and the rear member 130. A battery joining member 20 which is made of metal and enables joining with the battery 2 is embedded in the first elongated protrusion 211. In the illustrated example, a collar member for inserting a bolt is embedded in the resin material 200 as the battery joining member 20. An upper surface and a lower surface of the battery joining member 20 are exposed from the resin material 200. The battery 2 is fixed in position by being bolt-nut fastened to the battery case 10 via the battery joining member 20.

In addition, the bottom wall 210 is provided with a second elongated protrusion 212 that protrudes and extends in the vehicle body width direction in order to fix the front member 120 and the rear member 130. The second elongated protrusion 212 is in contact with the front hook portion 126 and the rear hook portion 136.

The bottom wall 210 is provided with a protrusion 213 protruding upward so as to enter the inside of the cross member 140 from the opening 145. The protrusion 213 fixes the position of the cross member 140 so as to be fitted to the cross projection 146.

The peripheral wall 220 rises vertically upward from the bottom wall 210 and constitutes a side surface on the outer side in the horizontal direction of the battery case 10. In the illustrated example, the peripheral wall 220 has a rectangular outer shape in plan view.

The peripheral wall 220 is provided with the side engagement portions 115 of the pair of side members 110, the front engagement portion 125 of the front member 120, and a resin material engagement portion 221 to be engaged with the rear engagement portion 135 of the rear member 130. The resin material engagement portion 221 has a hook shape that is hooked on the concave shapes of the side engagement portion 115, the front engagement portion 125, and the rear engagement portion 135. The resin material engagement portion 221 is arranged circumferentially in plan view.

In the present embodiment, the resin material 200 has a flange wall 230 extending horizontally outward from the peripheral wall 220. In the illustrated example, the thickness of the flange wall 230 is greater than the thickness of the bottom wall 210.

A vehicle body joining member 30 which is made of metal and enables joining with the vehicle body center portion (vehicle body) 4 is embedded in the flange wall 230. In the illustrated example, a collar member for inserting a bolt is embedded in the resin material 200 as the vehicle body joining member 30. An upper surface and a lower surface of the vehicle body joining member 30 are exposed from the resin material 200. The battery case 10 is fixed in position by being bolt-nut fastened to the vehicle body center portion (vehicle body) 4 via the vehicle body joining member 30.

According to the battery case 10 of the present embodiment, the following operational effects are obtained.

Since the frame 100 can be formed by integrally molding the resin material 200 and the frame 100 to form the bottom wall 210 and the peripheral wall 220 and fixing the plurality of extrusion materials 110, 120, 130, and 140 in a frame shape at the same time, the number of assembling steps can be reduced. Specifically, the step of joining the plurality of extrusion materials 110, 120, 130, and 140 in a frame shape to form the frame 100 and the step of joining another member such as a bottom plate to the frame 100 can be omitted or simplified. In addition, the battery accommodating space S without roundness can be configured by the flexible moldability of the resin material 200, and the mounting efficiency of the battery 2 can be improved. In addition, since the bottom wall 210 and the peripheral wall 220 constituting the outer surface are integrally formed without a seam by the resin material 200, it is possible to secure high sealability for preventing water from entering from the outside.

In addition, since a load in the vehicle body front-rear direction can be received by the pair of side members 110 and a load in the vehicle body width direction can be received by the cross member 140, high strength can be secured.

In addition, the battery case 10 and the vehicle body center portion (vehicle body) 4 can be firmly fixed via the vehicle body joining member 30.

In addition, the battery case 10 and the battery 2 can be firmly fixed via the battery joining member 20.

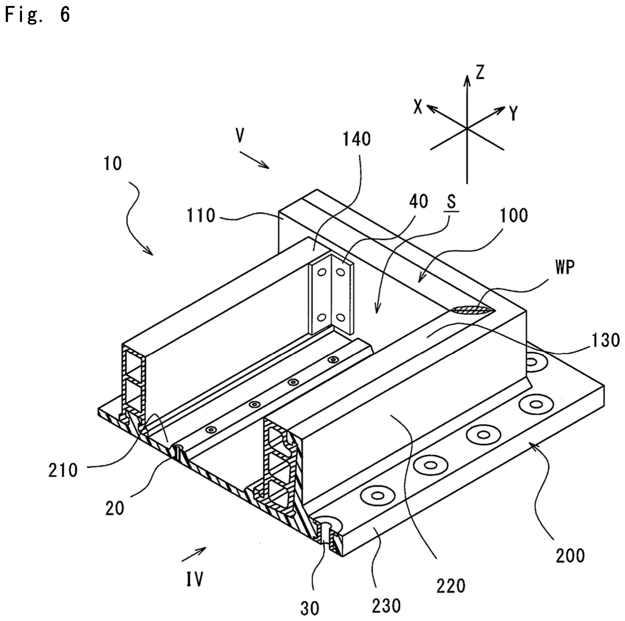

Referring to Fig. 6, the plurality of extrusion materials 110, 120, 130, and 140 may be joined by another joining means in addition to the resin material 200. For example, at least one set of the plurality of extrusion materials 110, 120, 130, and 140 may be welded together. Preferably, at least one set of the plurality of extrusion materials 110, 120, and 130 constituting the outer peripheral portion of the frame 100 is welded to each other. In the illustrated example, the pair of side members 110 and the rear member 130 are welded to each other on the top surfaces 114 and 134 (see a welded portion WP). However, the welded portion WP is not limited to the top surface, and may be provided at any position.

At least one set of the plurality of extrusion materials 110, 120, 130, and 140 may be fastened to each other by a bracket 40. In the illustrated example, the pair of side members 110 and the cross member 140 are fastened to each other by the bracket 40. The bracket 40 is an L-shaped sheet metal, and is configured to be capable of being bolt-nut fastened. At the same point, both welding and bracket fastening may be performed in an overlapping manner.

Since at least one set of the plurality of extrusion materials 110, 120, 130, and 140 is not only fixed by the resin material 200 but also separately joined to each other, the frame 100 can be firmly fixed as compared with a case where it is simply fixed by the resin material 200. In addition, since the shape of the frame 100 can be fixed to some extent before integral molding with the resin material 200, handling of the frame 100 at the time of integral molding can be facilitated.

### (Second embodiment)

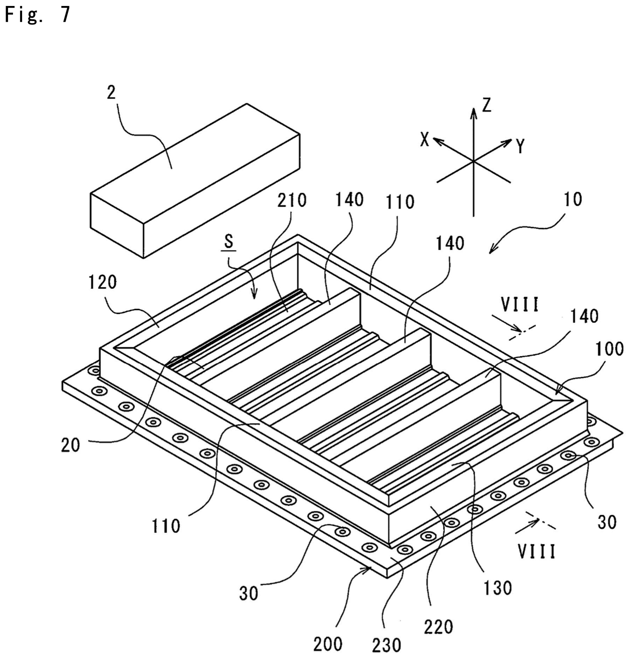

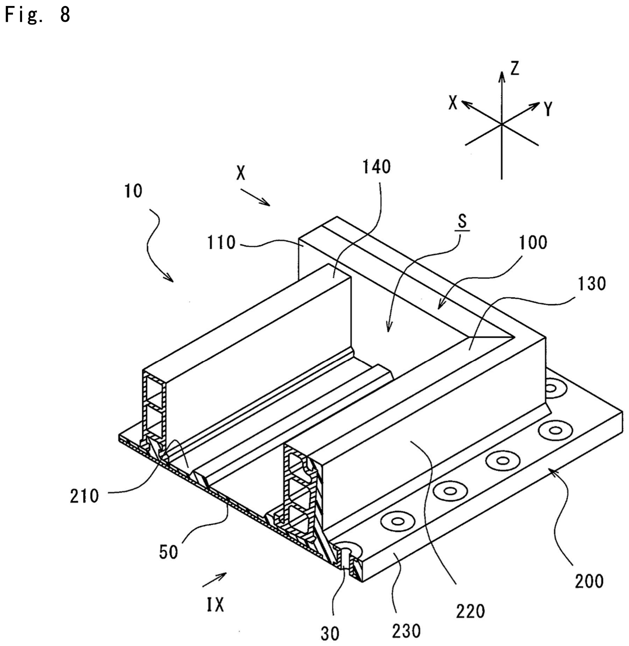

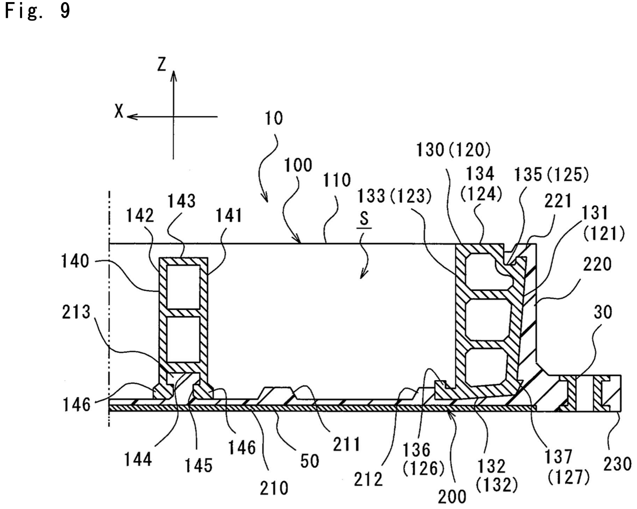

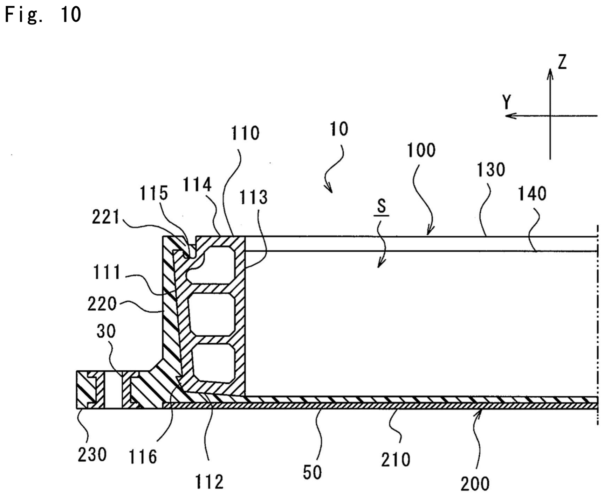

In a vehicular battery case 10 of a second embodiment shown in Figs. 7 to 10, a bottom plate 50 is added and the battery joining member 20 is omitted from the first embodiment. The second embodiment is substantially the same as the first embodiment except for these parts. Therefore, the description of the parts shown in the first embodiment may be omitted.

In the present embodiment, a bottom plate 50 made of metal is embedded in the bottom wall 210 of the resin material 200. In the illustrated example, the lower surface of the bottom plate 50 is exposed from the resin material 200. In the illustrated example, the bottom plate 50 has a rectangular shape in plan view, and has substantially the same size as the outer shape of the peripheral wall 220. However, the arrangement, shape, or size of the bottom plate 50 is not particularly limited.

In the present embodiment, the battery joining member 20 in the first embodiment is not arranged on the bottom wall 210, and no hole is provided in the bottom wall 210. However, a hole may be provided in the bottom plate 50 and the resin material 200, so that the bottom plate 50 can function as the battery joining member 20.

According to the battery case 10 of the present embodiment, the bottom plate 50 can protect the battery 2 against impact from the road surface, and high battery protection performance can be secured.

Although specific embodiments of the present invention and modifications thereof have been described above, the present invention is not limited to the above embodiments, and various modifications can be made within the scope of the present invention. For example, an appropriate combination of the contents of individual embodiments may be an embodiment of the present invention.

The present disclosure may include the following aspects.

### (Aspect 1)

A vehicular battery case including:
a frame in which a plurality of extrusion materials are arranged in a frame shape; and
a resin material integrally molded with the frame,
wherein the resin material includes
a bottom wall arranged on a lower side of the frame and having a bottom surface of the frame embedded therein, and
a peripheral wall arranged circumferentially on an outer side in a horizontal direction of the frame and having a side surface on the outer side in the horizontal direction of the frame embedded therein.

### (Aspect 2)

The vehicular battery case according to aspect 1, in which
the plurality of extrusion materials include:
a pair of side members extending in a vehicle body front-rear direction; and
a cross member extending in a vehicle body width direction and connecting the pair of side members.

### (Aspect 3)

The vehicular battery case according to aspect 1 or 2, in which at least one set of the plurality of extrusion materials is welded to each other.

### (Aspect 4)

The vehicular battery case according to any one of aspects 1 to 3, in which at least one set of the plurality of extrusion materials is fastened to each other by a bracket.

### (Aspect 5)

The vehicular battery case according to any one of aspects 1 to 4, in which
the resin material has a flange wall extending horizontally outward from the peripheral wall, and
a vehicle body joining member which is made of metal and enables joining with a vehicle body is embedded in the flange wall.

### (Aspect 6)

The vehicular battery case according to any one of aspects 1 to 5, in which a battery joining member which is made of metal and enables joining with a battery is embedded in the bottom wall.

### (Aspect 7)

The vehicular battery case according to any one of aspects 1 to 6, in which a bottom plate made of metal is embedded in the bottom wall.

This application claims priority based on Japanese Patent Application No. 2023-100058 filed on June 19, 2023. Japanese Patent Application No. 2023-100058 is incorporated herein by reference.

### REFERENCE SIGNS LIST

- 1: vehicle
- 2: battery
- 3: vehicle body front portion
- 4: vehicle body center portion
- 10: vehicular battery case
- 20: battery joining member
- 30: vehicle body joining member
- 40: bracket
- 50: bottom plate
- 100: frame
- 110: side member (extrusion material)
- 111: side surface
- 112: bottom surface
- 113: side surface
- 114: top surface
- 115: side engagement portion
- 116: side projection
- 120: front member (extrusion material)
- 121: side surface
- 122: bottom surface
- 123: side surface
- 124: top surface
- 125: front engagement portion
- 126: front hook portion
- 127: front projection
- 130: rear member (extrusion material)
- 131: side surface
- 132: bottom surface
- 133: side surface
- 134: top surface
- 135: rear engagement portion
- 136: rear hook portion
- 137: rear projection
- 140: cross member (extrusion material)
- 141: side surface
- 142: side surface
- 143: top surface
- 144: bottom surface
- 145: opening
- 146: cross projection
- 200: resin material
- 210: bottom wall
- 211: first elongated protrusion
- 212: second elongated protrusion
- 213: protrusion
- 220: peripheral wall
- 221: resin material engagement portion
- 230: flange wall

## Claims

1. A vehicular battery case comprising:
a frame in which a plurality of extrusion materials are arranged in a frame shape; and
a resin material integrally molded with the frame,
wherein the resin material includes
a bottom wall arranged on a lower side of the frame and having a bottom surface of the frame embedded therein, and
a peripheral wall arranged circumferentially on an outer side in a horizontal direction of the frame and having a side surface on the outer side in the horizontal direction of the frame embedded therein.

2. The vehicular battery case according to claim 1, wherein
the plurality of extrusion materials include:
a pair of side members extending in a vehicle body front-rear direction; and
a cross member extending in a vehicle body width direction and connecting the pair of side members.

3. The vehicular battery case according to claim 1 or 2, wherein at least one set of the plurality of extrusion materials is welded to each other.

4. The vehicular battery case according to claim 1 or 2, wherein at least one set of the plurality of extrusion materials is fastened to each other by a bracket.

5. The vehicular battery case according to claim 1 or 2, wherein
the resin material has a flange wall extending horizontally outward from the peripheral wall, and
a vehicle body joining member which is made of metal and enables joining with a vehicle body is embedded in the flange wall.

6. The vehicular battery case according to claim 1 or 2, wherein a battery joining member which is made of metal and enables joining with a battery is embedded in the bottom wall.

7. The vehicular battery case according to claim 1 or 2, wherein a bottom plate made of metal is embedded in the bottom wall.
